# EUROPEAN PATENT APPLICATION

(11) **EP 1 764 536 A2**
(43) Date of publication of application: **21.03.2007**
(21) Application number: 06018432.2
(22) Date of filing: 04.09.2006
(51) Int. Cl.: F16K 17/10

(54) **Hydraulic relief valve**

(30) Priority: 15.09.2005 KR 20050086047
(71) Applicant: Volvo Construction Equipment Holding Sweden AB, 631 85 Eskilstuna (SE)
(72) Inventor: Cheong, Hae Kyun, Sasang-gu Pusan (KR)
(74) Representative: Weitzel, Wolfgang

(57) **Abstract**

A hydraulic relief valve has a spring to offset an acting force of a spring resiliently supporting a main poppet so as to improve the make-up function of supplementing a hydraulic fluid since the outflow rate is higher than the inflow rate when the cylinder is retracted by an external force, in the case in which a pilot piston type of relief valve having a pilot piston (60) displaceable in an orifice penetrating a main poppet (20) is applied to a hydraulic system equipped with a cylinder. The pilot piston (60) is provided with a circular rib on an external surface thereof, and an external surface of the orifice is partially cut to form a space around the external surface of the pilot piston (60). The external spring (70) is installed between the valve seat and the external surface of the rib, and the internal spring (80) is installed between the internal surface of the rib and the cut surface of the main poppet.

## Description

### CROSS-REFERENCE TO RELATED APPLICATION

This application is based on and claims priority from Korean Patent Application No. 10-2005-86047, filed on September 15, 2005 in the Korean Intellectual Property Office, the disclosure of which is incorporated herein in its entirety by reference.

### BACKGROUND OF THE INVENTION

### Field of the invention

The present invention relates to a hydraulic relief valve, and more particularly, to a hydraulic relief valve having a spring to offset the acting force of a spring resiliently supporting a main poppet, so as to improve the make-up function of supplementing a hydraulic fluid since the outflow rate is higher than the inflow rate when the cylinder is retracted by an external force, in the case in which a pilot piston type of a relief valve, having a pilot piston displaceable in an orifice penetrating a main poppet, is applied to a hydraulic system equipped with a cylinder.

### Description of the Prior Art

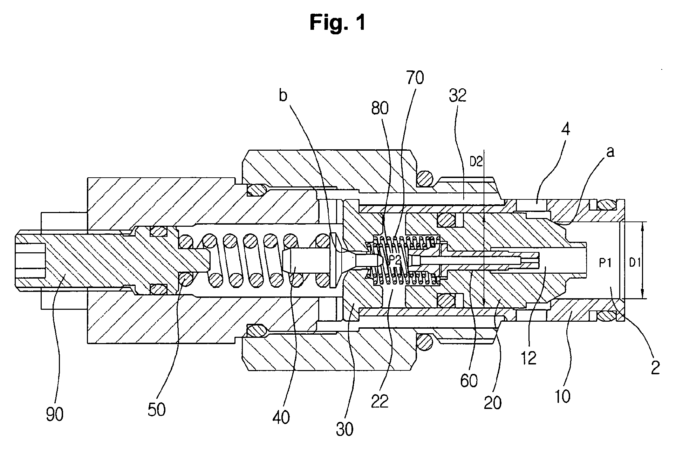

FIG. 1 is a cross-sectional view illustrating the construction of a conventional hydraulic relief valve.

Referring to FIG. 1, the hydraulic relief valve includes a sleeve 10 having a high-pressure flow path 2 formed on one side of the sleeve, through which a hydraulic fluid of a high pressure P1 passes from a hydraulic pump P, and a tank-side flow path 4 formed on an external surface of the sleeve, through which the hydraulic fluid is drained from the high-pressure flow path 2 to a tank T, a main poppet 20 carried in the sleeve 10 that can shift to open/close a throttling portion a of the sleeve to control the hydraulic fluid returned to the tank-side flow path 4, and having an orifice 12 formed in an internal center thereof, a valve seat 30 formed on the other side of the sleeve to form a back chamber 22 between the valve seat 30 and the main poppet 20, a pilot poppet 40 controlling the hydraulic fluid returned to a drain flow path 32 when pressure P2 of the hydraulic fluid flowing from the hydraulic pump P to the back chamber 22 exceeds a predetermined pressure value, a main spring 50 setting a pressure value F and resiliently supporting the pilot poppet 40 within the predetermined pressure value, a pilot piston 60 displaceable left and right in the orifice 12, an external spring 70 mounted between the valve seat 30 and the main poppet 20 to support the main poppet 20 in a direction closing the throttling portion a of the sleeve, and an internal spring 80 mounted between the valve seat 30 and the pilot piston 60 to support the pilot piston 60 in a direction closing the orifice 12. Reference numeral 90 denotes a control plug.

The operation of the hydraulic relief valve will now be described with reference to Fig. 1.

First, the case in which a set pressure F of the relief valve is higher than the acting pressure of a hydraulic system will now be described. If the acting force F of the main spring 50 set by the control plug 90 exceeds the pressure P1 of the hydraulic fluid acting on the high-pressure flow path 2, the main poppet 20 acts in a seating direction in accordance with a sectional area difference of the main poppet 20.

More specifically, under the condition in which the pressure P1 in the high-pressure flow path is equal to the pressure P2 in the back chamber, the sectional area D1 of the pressure side of the main poppet 20 (on the right in FIG. 1) is smaller than the sectional area D2 of a pressure side of the main poppet 20 (on the left in FIG. 2). Since the main poppet 20 is pushed towards the right by the external spring 70, the main poppet 20 is seated on the throttling portion a of the sleeve to close the sleeve. Consequently, the hydraulic fluid is not drained to the tank-side flow path 4 from the high-pressure flow path 2, so that the relief valve is kept in a neutral position.

The case in which the set pressure F of the relief valve is lower than the acting pressure of the hydraulic system will now be described. If the pressure P2 in the back chamber 22 exceeds the resilient modulus of the main spring 50 that resiliently supports the pilot poppet 40, the pilot poppet 40 is shifted in the left direction on FIG. 1, and the pressurized hydraulic fluid in the back chamber 22 is drained to the hydraulic tank T via the throttling portion *b* of the valve seat 30 and the drain flow path 32.

As the pressurized hydraulic fluid passes through the orifice 12, pressure loss occurs, and the pressure P1 of the hydraulic fluid acting on the high-pressure passage 2 is greater than the pressure P2 in the back chamber. Consequently, the hydraulic force acting on the pilot piston 60 is greater than the resilient force of the internal spring 80. The pilot piston 60 comes in contact with the pilot poppet 40, and thus the hydraulic fluid is leaked from the back chamber 22. Therefore, pressure loss is further increased, and the main poppet 20 is shifted in an open direction (left direction in FIG. 1). As a result, the hydraulic fluid is drained to the tank T, thereby preventing the pressure of the hydraulic system from being overly increased.

Meanwhile, in the case in which the relief valve is used in a hydraulic system equipped with a cylinder, when the cylinder is retracted by an external force, the outflow rate is increased relative to the inflow rate. Therefore, it is required to supplement the hydraulic fluid. That is, since the flow rate of the hydraulic fluid to be drained is higher than the flow rate of the hydraulic fluid to be supplied during arm-in, bucket-in, or boom-down movement of an excavator, a make-up function supplementing the hydraulic fluid is required.

As described above, if the inflow rate is lower than the outflow rate, the pressure in the tank-side flow path 4 is lower than that in the high-pressure flow path 2. The pressure of the pressurized hydraulic fluid is greater than the combined force of the force acting on the sectional area of the pressure side of the main poppet 20, the resilience of the external spring 70 acting on the main poppet 20, and the resilience of the internal spring 80 acting on the pilot piston 60. Therefore, the main poppet 20 is shifted to the open direction (toward the left direction on FIG. 1), and the high-pressure flow path 2 is supplemented by the hydraulic fluid from the tank-side flow path 4, thereby preventing cavitation in the cylinder due to the flow shortage.

However, the conventional hydraulic relief valve has the following disadvantages.

In the case of performing the aforementioned make-up function, since the resilience of the spring acts as the summed force of the external spring 70 and the internal spring 80, the resilience of the spring is increased. Thus, the pressure in the tank-side flow path 4 performing the fluid supplement against the flow shortage is increased, so that its make-up performance is deteriorated in the course of nature.

Also, since the external spring 70 and the internal spring 80 are doubly mounted in the narrow space, the construction is very complicated, and thus the assembly thereof is difficult. Further, an operational impediment occurs due to the interference between the springs.

### SUMMARY OF THE INVENTION

Accordingly, the present invention has been made to solve the above-mentioned problems occurring in the prior art while advantages achieved by the prior art are maintained intact.

One object of the present invention is to provide a hydraulic relief valve that can improve the make-up function of supplementing a hydraulic fluid which is performed when the outflow rate is higher than the inflow rate during arm-in, bucket-in, or boom-down movement of an excavator, in the case in which the relief valve is applied to a hydraulic system equipped with a cylinder.

Another object of the present invention is to provide a hydraulic relief valve capable of improving the ease of assembling an external spring and an internal spring in a narrow space of the relief valve and relieving the interference of the internal and external springs.

In order to accomplish these objects, there is provided a hydraulic relief valve, according to the present invention, which includes a sleeve having a high-pressure flow path formed on one side of the sleeve, through which a hydraulic fluid of high pressure passes from a hydraulic pump, and a tank-side flow path formed on an external surface of the sleeve, through which the hydraulic fluid is drained from the high-pressure flow path to a tank; a main poppet carried in the sleeve that can shift to open/close a throttling portion of the sleeve in order to control the hydraulic fluid returned to the tank-side flow path, and having an orifice formed in an internal center thereof; a valve seat formed on the other side of the sleeve to form a back chamber between the valve seat and the main poppet; a pilot poppet controlling the hydraulic fluid returned to a drain flow path when pressure of the hydraulic fluid flowing from the hydraulic pump to the back chamber exceeds a predetermined pressure value; a main spring setting a pressure value and resiliently supporting the pilot poppet within a predetermined pressure value; a pilot piston displaceable in the orifice left and right; an external spring supported on the valve seat, and supporting the main poppet in a direction closing the throttling portion of the sleeve; and an internal spring offsetting a resilient force of the external spring.

Preferably, the pilot piston is provided with a circular rib on an external surface thereof, and an external surface of the orifice is partially cut to form a space around the external surface. The external spring is installed between the valve seat and the external surface of the rib, and the internal spring is installed between the internal surface of the rib and the cut surface of the main poppet.

With the above construction of the hydraulic relief valve according to the present invention, the springs are easily assembled, and the make-up function is improved.

### BRIEF DESCRIPTION OF THE DRAWINGS

The above and other objects, features and advantages of the present invention will be more apparent from the following detailed description taken in conjunction with the accompanying drawings, in which:
FIG. 1 is a cross-sectional view illustrating the construction of a conventional hydraulic relief valve;
FIG. 2 is a cross-sectional view illustrating the construction of a hydraulic relief valve according to the present invention;
Fig. 3 is a graph illustrating variations of a force acting on a main poppet of a hydraulic relief valve according to the present invention; and
Fig. 4 is a graph illustrating variations of a force acting on a pilot piston of a hydraulic relief valve according to the present invention.

### DETAILED DESCRIPTION OF THE PREFERRED EMBODIMENTS

Hereinafter, a preferred embodiment of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

The construction of a hydraulic relief valve according to the present invention will now be described in detail with reference to the preferred embodiment.

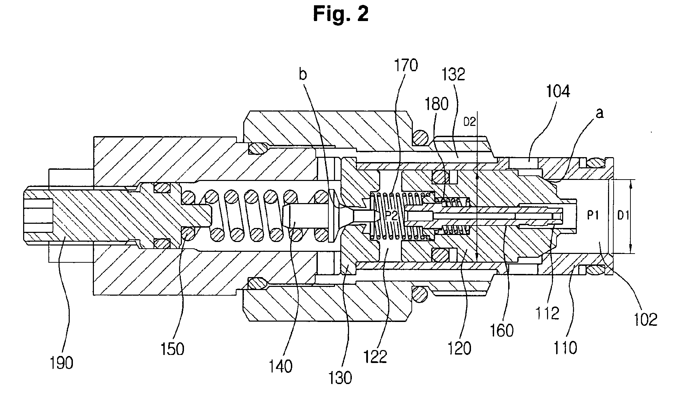

FIG. 2 is a cross-sectional view illustrating the construction of the hydraulic relief valve according to the present invention.

Referring to FIG. 2, the hydraulic relief valve includes a sleeve 110 having a high-pressure flow path 102 formed on one side of the sleeve, through which a hydraulic fluid of high pressure P1 passes from a hydraulic pump P, and a tank-side flow path 104 formed on an external surface of the sleeve, through which the hydraulic fluid is drained from the high-pressure flow path 102 to a tank T, a main poppet 120 carried in the sleeve 110 that can shift to open/close a throttling portion a of the sleeve to control the hydraulic fluid returned to the tank-side flow path 104, and having an orifice 112 formed in its internal center, a valve seat 130 formed on the other side of the sleeve to form a back chamber 122 between the valve seat 130 and the main poppet 120, a pilot poppet 140 controlling the hydraulic fluid returned to a drain flow path 132 when pressure P2 of the hydraulic fluid flowing from the hydraulic pump P to the back chamber 122 exceeds a predetermined pressure value, and a main spring 150 setting a pressure value F and resiliently supporting the pilot poppet 140 within the predetermined pressure value. The above-mentioned construction is substantially identical to that of FIG. 1.

The present invention relates to a pilot piston type of a relief valve equipped with a pilot piston 160 displaceable left and right in the orifice 112. An external spring 170 is installed between the valve seat 130 and the pilot piston 160 to support the main poppet 120 in a direction closing the throttling portion a of the sleeve.

Specifically, the pilot piston 160 is provided with a circular rib on its external surface. The external surface of the orifice 112 formed in the internal center of the main poppet 120 is partially cut to form a space around the external surface of the pilot piston 160. Therefore, the external spring 170 is installed between the valve seat 130 and the external surface of the rib, and an internal spring 180 is installed between the internal surface of the rib and the cut surface of the main poppet 120.

As such, the present invention is characterized in that the external spring 170 and the internal spring 180 are disposed in such a way that a resilient force of the external spring 170 is opposite to that of the internal spring 180. Accordingly, when the make-up function is performed, the resilient force of the internal spring 180 does not act, which solves the conventional problem of deteriorating the make-up function that occurs because the external spring 70, mounted between the valve seat 30 and the main poppet 20, and the internal spring 80, mounted between the valve seat 30 and the pilot piston 60, are simultaneously operated.

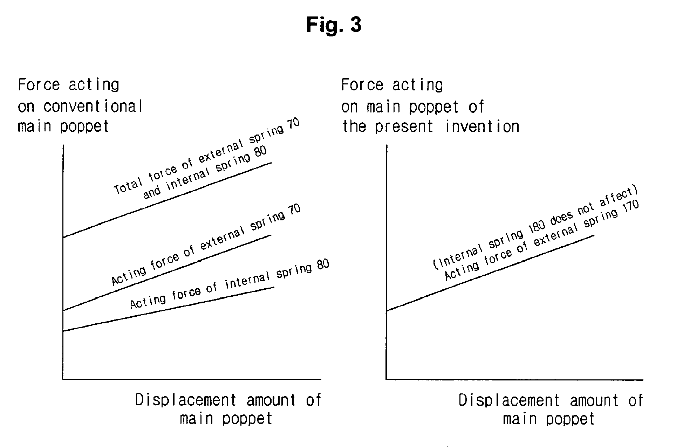

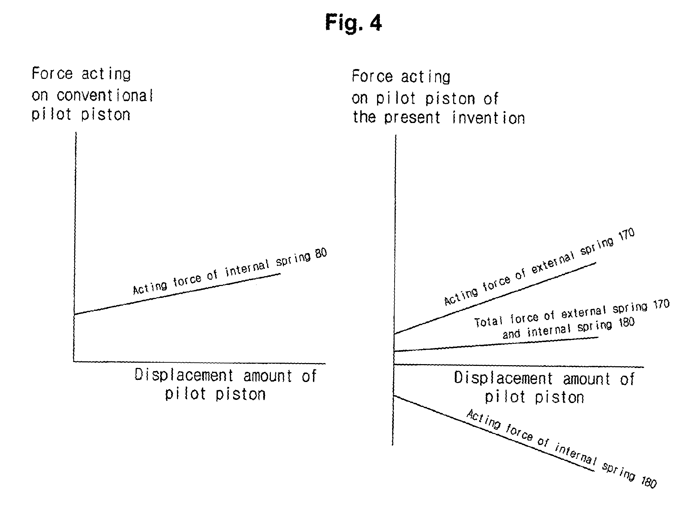

Comparing the force acting on the main poppet 120 and the pilot piston 160 according to the present invention with that of the prior art, it will be understood from FIG. 3 that the spring force acting on the main poppet 120 is stable. As shown in FIG. 4, the spring force acting on the pilot piston 160 tends to decrease in some cases, since the internal and external springs 170 and 180 are mutually operated in opposite directions.

As described above, the present invention causes the hydraulic relief valve having the internal spring to offset the acting force of the external spring resiliently supporting the main poppet, so as to improve the make-up function of supplementing the hydraulic fluid since the outflow rate is higher than the inflow rate when the cylinder is retracted by an external force, in the case in which the pilot piston type of relief valve having the pilot piston displaceable in the orifice penetrating the main poppet is applied to the hydraulic system equipped with the cylinder.

As the above description, the present invention has the following effects.

In the case in which the relief valve is applied to the hydraulic system equipped with the cylinder, the tank-side pressure is not high due to the acting force of the internal spring which offsets the resilient force of the external spring closing the main poppet, even though the outflow rate is higher than the inflow rate during arm-in, bucket-in, or boom-down movement of an excavator. Consequently, the present invention can improve the make-up function.

Also, since the external spring and the internal spring are disposed in an opposite relation, the external spring and the internal spring can be assembled in a narrow space of the relief valve.

Although the preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A hydraulic relief valve comprising:
a sleeve having a high-pressure flow path formed on one side of the sleeve, through which a hydraulic fluid of high pressure passes from a hydraulic pump, and a tank-side flow path formed on an external surface of the sleeve, through which the hydraulic fluid is drained from the high-pressure flow path to a tank;
a main poppet carried in the sleeve that can shift to open/close a throttling portion of the sleeve in order to control the hydraulic fluid returned to the tank-side flow path, and having an orifice formed in an internal center thereof;
a valve seat formed on the other side of the sleeve to form a back chamber between the valve seat and the main poppet;
a pilot poppet controlling the hydraulic fluid returned to a drain flow path when pressure of the hydraulic fluid flowing from the hydraulic pump to the back chamber exceeds a predetermined pressure value;
a main spring setting a pressure value and resiliently supporting the pilot poppet within a predetermined pressure value;
a pilot piston displaceable in the orifice left and right;
an external spring supported on the valve seat, and supporting the main poppet in a direction closing the throttling portion of the sleeve; and
an internal spring offsetting the resilient force of the external spring.

2. The hydraulic relief valve as claimed in claim 1, wherein the pilot piston is provided with a circular rib on an external surface thereof, an external surface of the orifice is partially cut to form a space around the external surface of the pilot piston, the external spring is installed between the valve seat and the external surface of the rib, and the internal spring is installed between the internal surface of the rib and the cut surface of the main poppet.
